(19) Europäisches Patentamt
European Patent Office
Office européen des brevets

(11) **EP 3 469 506 B1**

(12) **EUROPEAN PATENT SPECIFICATION**

(45) Date of publication and mention
of the grant of the patent:
**26.07.2023  Bulletin 2023/30**

(21) Application number: **17810921.1**

(22) Date of filing: **07.06.2017**

(51) International Patent Classification (IPC):
*G06F 21/31* (2013.01)      *H04W 12/065* (2021.01)
*H04W 12/08* (2021.01)      *H04W 12/126* (2021.01)
*H04W 12/082* (2021.01)

(52) Cooperative Patent Classification (CPC):
**G06F 21/316; H04W 12/065; H04W 12/082;
H04W 12/126**

(86) International application number:
**PCT/US2017/036321**

(87) International publication number:
**WO 2017/214253 (14.12.2017 Gazette 2017/50)**

(54) **METHOD AND APPARATUS FOR DETECTING UNAUTHORIZED USE OF A MOBILE DEVICE**

VERFAHREN UND VORRICHTUNG ZUR DETEKTION DER UNBEFUGTEN VERWENDUNG EINER MOBILEN VORRICHTUNG

PROCÉDÉ ET APPAREIL DESTINÉS À DÉTECTER UNE UTILISATION NON AUTORISÉE D'UN DISPOSITIF MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2016  US 201615177070**

(43) Date of publication of application:
**17.04.2019  Bulletin 2019/16**

(73) Proprietor: **Visa International Service Association
San Francisco, California 94128 (US)**

(72) Inventor: **CIDAMBI, Chandrasekhar
Foster City, CA 94404 (US)**

(74) Representative: **EIP
Fairfax House
15 Fulwood Place
London WC1V 6HU (GB)**

(56) References cited:
**US-A1- 2008 035 725      US-A1- 2010 293 094
US-A1- 2010 299 757      US-A1- 2010 299 757
US-A1- 2016 063 471      US-A1- 2016 066 189
US-B1- 6 377 798**

## Description

Background

US 2016/0063471 A1 discloses methods and a system for passive authentication.

The present disclosure relates to authentication system and methods, and more particularly to authentication systems and methods associated with mobile devices.

Summary

According to a first aspect of the invention there is provided an apparatus, as defined by appended claim 1. According to a second aspect of the invention there is provided a method, as defined by appended claim 9. According to a third aspect of the invention there is provided a computer readable medium, as defined by appended claim 13.

A method and apparatus for detecting unauthorized use of a mobile device is disclosed. The method and apparatus may include comparing two sets of electronic fingerprints associated with use of a mobile device to determine whether a current user of the mobile device is the same person as a trusted user of the mobile device. In one embodiment, the sets of electronic fingerprints include user communication electronic fingerprints such as voice communication electronic fingerprints and text communication electronic fingerprints. The sets of electronic fingerprints may also include network communication electronic fingerprints such as cellular, Bluetooth, beacon, NFC, wi-fi, satellite, and/or terrestrial communication electronic fingerprints. In another embodiment, the sets of electronic fingerprints may include power status, payment, camera, and/or terrestrial electronic fingerprints.

In one embodiment, the sets of electronic fingerprints are represented by matrices where each component part of the matrices represents an attribute of a communication, power status, payment history, camera usage, and/or navigation usage. In one embodiment, matrix similarity algorithms may be used to compare the sets of matrices to determine if they are sufficient similar based on a predetermined threshold.

In one embodiment, if the second person is determined not to be the first person of the mobile phone, then a payment instrument (e.g., a mobile wallet) associated with the mobile device is de-activated or disabled.

## Brief Descriptions of the Drawings

The detailed description refers to the following Figures in which:

FIG. 1 is a block diagram illustrating an exemplary environment in which a mobile device may operate in accordance with the present disclosure;

FIG. 2 is a block diagram illustrating an exemplary mobile device and associated logic in accordance with the present disclosure; and

FIG. 3 is a flow chart illustrating an exemplary method of using mobile device authentication server of FIG. 1 in accordance with on embodiment of the present disclosure.

## Detailed Description

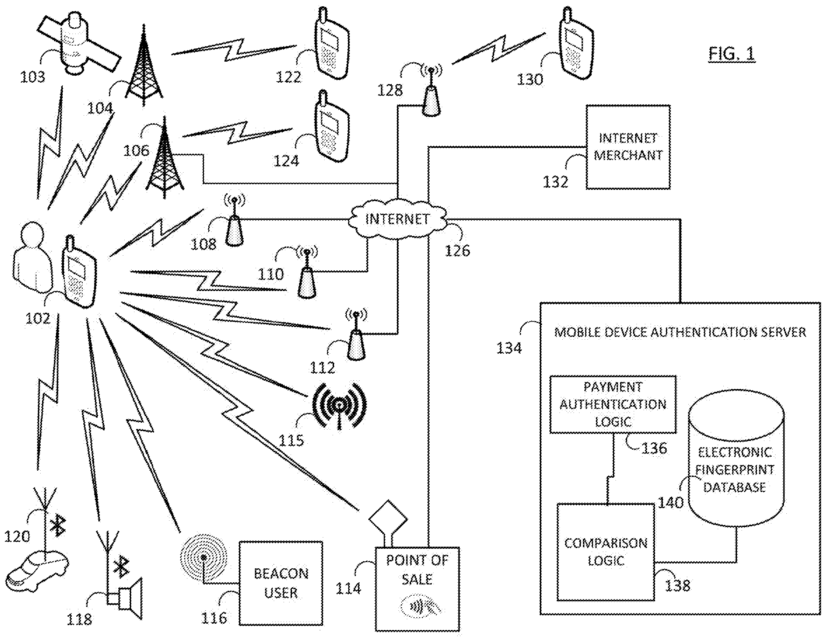

FIG. 1 depicts first mobile device 102 in operable communication with satellite 103; cellular towers 104, 106; first, second, and third wi-fi routers 108, 110, 112; NFC point-of-sale device 114; beacon user 116; Bluetooth devices 118, 120; and terrestrial antenna 115. One of skill in the art will recognize that first mobile device 102 may be any mobile computing device with communication capability, including but not limited a smartphone and/or tablet. Satellite 103 may constitute any satellite capable of offering services accessible to first mobile device 102 such as but not limited to navigational services (e.g., via GPS and/or GLONASS), streaming music services, or other communication services. Cellular towers 104, 106 may constitute cellular communication towers operated by or affiliated with one or more cellular phone carriers such as Verizon Wireless and/or T-Mobile, regardless of the specific cellular technology supported by the cellular towers 104, 106 (e.g., CDMA, GMS, 2G, 3G, 4G, LTE, etc.). Cellular towers 104, 106 are in operable communication with second and third mobile devices 122, 124, and Internet 126.

First, second, and third wi-fi routers 108, 110, 112 may be routers which broadcast a wireless internet signal in accordance with the IEEE 802.11 protocol Logically, first, second and third wi-fi routers 108-112 may be in operable communication with Internet 126, through e.g., modems and/or other network equipment (not illustrated) as is known in the art.

Point of sale device 114 may be a near field communication point-of-sale device (NFC POS). In one embodiment, point of sale device 114 may include an NFC antenna through which first mobile device 102 may be capable of communicating a payment instrument to a merchant to effectuate a payment transaction for, e.g., goods and/or services. In one embodiment, point of sale device 114 may be operated by or associated with a merchant selling goods and/or services. For example, point of sale device 114 may be located at a check-out counter at a grocery store, hardware store, or at gas pumps for easy payment by the user of first mobile device 102. Beacon user 116 may be any user utilizing a Bluetooth low-energy proximity sensing device and antenna in accordance with, e.g., the iBeacon protocol, with which first mobile device 102 may communicate.

Bluetooth speaker 118 and Bluetooth vehicle 120 may be representative examples of devices that may be equipped with Bluetooth antennas. First mobile device 102 may be in operable communication with Bluetooth devices 118, 120. For example first mobile device 102 may transmit a song or other audio or video file to Bluetooth speaker 118 and Bluetooth vehicle 120 for playback on associated speakers. A fourth mobile device 130 may be in operable communication with a fourth wi-fi router 128, which in turn is operatively coupled to Internet 126. Internet merchant 132 may be in operable communication with internet 126.

Mobile device authentication server 134 may be operatively coupled to Internet 126. Mobile device authentication server 134 may include comparison logic 138, electronic fingerprint database 140, and payment authentication logic 136.

In one embodiment, first mobile device 102 may be associated with an owner or authorized user. By simply using the first mobile device 102, the owner/authorized user may interact with various antenna, devices and the Internet as depicted in FIG. 1 in order to communicate with others and otherwise obtain the benefit of third party services available through the first mobile device 102, as generally described above. And by so interacting with these antenna, devices, and the Internet, the user of the first mobile device 102 may create a usage profile that may include user attributes that can be used to identify the user just as a physical fingerprint identifies a human.

For example, if the user associated with the first mobile device is a teenager, then one would expect a profile that include heavy use of cellular activity before and after school hours. However, if the owner of the first mobile device 102 is a travelling salesperson, then the user profile may include more consistent use of cellular data traffic during the business hours, and perhaps less in the late evenings. Relatedly, if the owner of the first mobile device 102 is a mother of a family of children who are enrolled in school and sporting activities, then the device may be utilized to connect to multiple routers throughout any given school day. For example, in the morning and evenings the first mobile device 102 might communicate with a first wi-fi router 108 associated with the owner's home. During the day, however, the first mobile device 102 may connect to second and third wi-fi routers 110, 112, where second wireless router 110 corresponds to a wireless access point associated with a coffee shop located near the children's school frequented by the mother after she drops her children off at school each day. Third wi-fi router 112 may be associated with a gymnasium or other athletic facility such as the facility where the mother's children are enrolled in swim lessons. And, on days where the children may have swim lessons, then the first mobile device 102 will connect to third wi-fi router 112. On the weekends, another pattern may be established based on the family calendar of activities.

As an owner of first mobile device 102 settles into the so-called rhythm of life and develops behaviors such as purchasing gasoline and/or groceries on certain days of the week in a geographical region nearby the owner's home, other patterns may be used to assist in identifying the user of the first mobile device 102. Relatedly, first mobile device 102 may be used regularly to establish communication with one or more beacon users 116. For example, an all-purpose store such as Target may utilize beacons to communicate with shoppers in order to advertise certain specials that are currently available to such shoppers. The owner of first mobile device 102 may regularly be in operable communication with beacon user 116, whenever they shop at Target, in order to obtain such broadcasts and take advantage thereof.

Similarly usage patterns may be created based on communication with various Bluetooth devices. For example, if first mobile device 102 is used primarily by a professional who has a Bluetooth speaker in their office, then first mobile device 102 may connect to such Bluetooth speaker 118 from Monday through Friday from 8:00 a.m. to 5:00 p.m. Relatedly, first mobile device 102 may be utilized by the same professional to connect to Bluetooth vehicle 120 from 7:00 a.m. to 8:00 a.m. and from 5:00 p.m. to 6:00 p.m. during the morning and after commutes to and from the office.

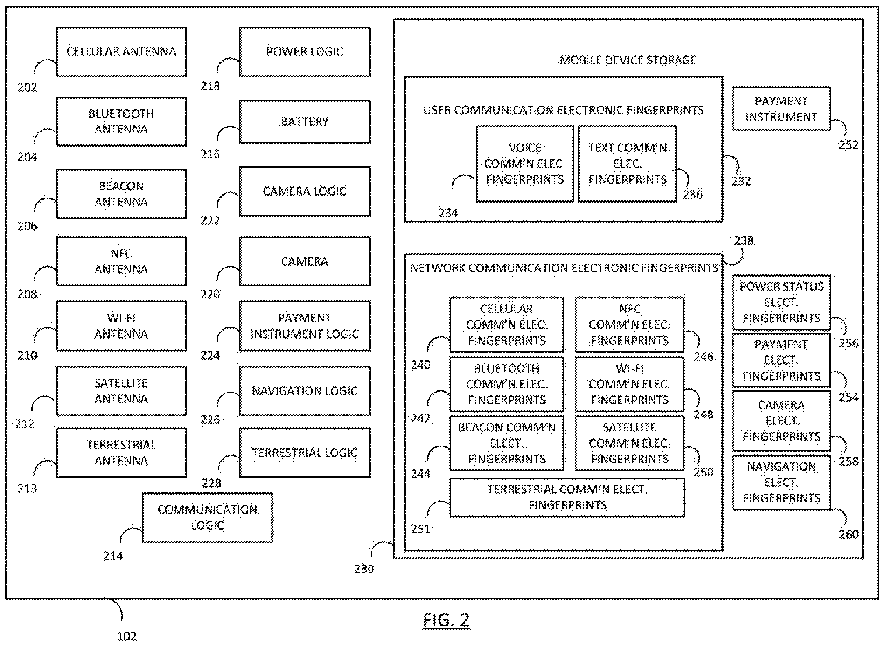

With reference to FIG. 2, a block diagram of first mobile device 102, antennas 202-213 which may enable first mobile device 102 to engage in user and network communications with similar devices and antenna as described with respect to FIG. 1. User communications may include voice-based and text-based communications. Voice-based communications may include cellular phone calls and phone calls made using voice over IP (VOIP). Text-based communications may include text messages and/or messages sent via SMS, MMS, and email, etc. regardless as to whether the body of the message actually includes text or other multi-media such as video or audio recordings. Network communications may include any machine to machine communication such as a communication or electronic handshake between first mobile device 102 and satellite 103, cellular towers 104, 106; first-third wi-fi routers 108-112, the NFS antenna associated with point of sale device 114, beacon antenna associated with beacon user 116, and Bluetooth antenna associated with devices 118-120. Communication logic 214 may monitor voice, text, and network traffic on antennas 202-212 and may record attributes associated with the same in mobile device storage 230.

For example, communication logic 214 may record the following attributes associated with voice communications with devices in operable communication with the first mobile device 102 (e.g., second, third, and/or fourth mobile devices 122, 124, and 130 and/or any device operably coupled to Internet 126 and/or cellular towers 104, 106 and/or satellite 103): date and time of the communication, an identifier of the third party recipient of the communication (e.g., the intended user of the second, third, and fourth mobile devices 122, 124, and 130), a speaking pattern associated with each communication, a volume associated with the communication, and a protocol, standard, or technology associated with the communication. The identifier may be an area code, a phone number, a VOIP number, any other unique identifier of the third party or recipient of the communication, or a hashed version of the foregoing. The speaking pattern may correspond to the duration in which a microphone (not shown) associated with the first mobile device 102 may have converted acoustical energy into electrical energy and/or the duration in which a speaker associated with first mobile device 102 (not illustrated) may have converted electrical energy into acoustical energy. The volume may correspond to an amplitude of an audio signal created by the microphone (not illustrated) associated with the first mobile device 102 and/or the volume setting of a speaker (not illustrated) associated with the first mobile device 102. Finally, the recorded protocol, standard, or technology associated with the communication may correspond to any communication protocol, standard, or technology (e.g., service) such as, but not limited to, CDMA, GMS, LTE, 2G, 3G, 4G, and VOIP.

Similar information may be recorded for text or textual communications (e.g., text messages via SMS and MMS, and emails). Here, communication logic 214 may record the following attributes: an identifier associated with another party to the communication, a character length of the communication, a special character usage indicator, and a protocol, standard, or technology associated with the communication. For example, an identifier may be a phone number, user name, screen name, email address, domain name, etc. associated with the recipient of a text or textual message. A character length may identify the number of characters of the message, a special character usage indicator may indicate the extent to which emoticons or other unique characters are present in the communication, and the protocol, standard, or technology may indicate whether the message was communicated via SMS, MMS, iMessage, email, or via other technology or service. Other indicators may indicate whether multi-media was included as part of the text communication.

Communication logic 214 may store the foregoing attributes in storage 230 as user communication electronic fingerprints 232. In particular, communication logic 214 may store the attributes associated with voice communications as voice communication electronic fingerprints 234 distinct from the attributes associated with text communications, which may be stored as text communication electronic fingerprints 236. The attributes associated with user communication electronic fingerprints 232 may be subject to a hash operation prior to being stored as fingerprints in mobile device storage 230. Communication logic 214 may monitor and store fingerprints 232, 234, 236 in mobile device storage 230 on an hourly, daily, monthly, yearly, or on any other periodic or aperiodic basis.

One exemplary voice communication electronic fingerprint 234 is depicted below as 5x4 Matrix 1 comprising binary values with additional row and column headers for context.

Matrix 1:

$$\begin{bmatrix} & 0-2\,min & 2-5\,min & 5-15\,min & \geq 15\,min \\ 1x & 1 & 0 & 0 & 0 \\ 2x & 0 & 1 & 1 & 0 \\ 3x & 0 & 0 & 0 & 0 \\ 4x & 0 & 0 & 0 & 0 \\ \geq 4x & 0 & 0 & 0 & 1 \end{bmatrix}$$

Here, the depicted exemplary voice communication electronic fingerprint 234 of Matrix 1 may include information representing, for a given third party recipient identifier (e.g., a particular phone number or a group of phone numbers sharing a common area code), the number (i.e., frequency) of communications that occurred within a given period of time having certain durational attributes. In the example of Matrix 1, the data may be associated with a group of third party phone numbers affiliated with a common area code and communication therewith over the course of a day. In particular, Matrix 1 may indicate that there was a single communication with the third party that lasted 0-2 minutes, two communications that lasted 2-5 minutes, three communications that lasted 5-15 minutes, and more than four communications that lasted 15 or more minutes in duration.

Another exemplary voice communication electronic fingerprint 234 is depicted below as 24x5 Matrix 2 which may include non-binary values with additional row and column headers for context.

Matrix 2:

$$
\begin{bmatrix}
 & Freqeuncy & Avg.\ Duration & Avg.\ Speak.\ Pattern & Avg.\ Vol. & Tech \\
0\ hr & 0 & 0 & 0 & 0 & 0 \\
\cdots & \cdots & \cdots & \cdots & \cdots & \cdots \\
11\ hr & 2 & 5 & 45 & 5 & 1 \\
12\ hr & 1 & 15 & 52 & 5 & 1 \\
\cdots & \cdots & \cdots & \cdots & \cdots & \cdots \\
16\ hr & 1 & 42 & 15 & 5 & 1 \\
\cdots & \cdots & \cdots & \cdots & \cdots & \cdots \\
23\ hr & 0 & 0 & 0 & 0 & 0
\end{bmatrix}
$$

Here, the depicted exemplary voice communication electronic fingerprint 234 in of Matrix 2 may include information representing, for a given third party recipient identifier (e.g., a particular phone number or a group of phone numbers sharing a common area code), certain attributes by hour of a day (in military time) including the frequency or number of communications in a given hour, the average duration of each communication, the average speaking pattern, the average volume, and the technology used. In the example of Matrix 2, the data may be associated with a single VOIP identifier and Matrix 2 indicates communications over a 24-hour period. In particular, during the midnight hour, there may have been no communications, during the 11 AM hour, there were two communications lasting 5 minutes on average. The average speaking pattern for the two communications may be 45, which may indicate that the user of the first mobile device 102 spoke on average 45 percent of the time during each communication. The average volume for both communications was 5, which may indicate that the average speaking setting associated with the first mobile device 102 was set to volume setting 5, and that the technology, from the first mobile device 102's perspective, used for both communications was CDMA. One of skill in the art may recognize that other numbers in this column may indicate that other technologies and/or the use of multiple technologies. Other data is illustrated in Matrix 2 for the noon hour, in addition to the 4 PM and 11 PM hours. Although the information contained displayed in Matrix 2 is displayed in non-binary form, one of skill in the art will readily appreciate that data recorded in Matrix 2 may take on any form, which may increase or decrease the size of Matrix 2.

An exemplary text communication electronic fingerprint 236 may be depicted below as 5x4 Matrix 3 comprising binary values with additional row and column headers for context.

Matrix 3:

$$
\begin{bmatrix}
 & 0-10\ char & 11-20\ char & 21-30\ char & \geq 30\ char \\
1x & 0 & 0 & 0 & 1 \\
2x & 1 & 1 & 0 & 0 \\
3x & 0 & 0 & 0 & 0 \\
4x & 0 & 0 & 1 & 0 \\
\geq 4x & 0 & 0 & 0 & 0
\end{bmatrix}
$$

Here, the depicted exemplary text communication electronic fingerprint 236 of Matrix 3 may include information representing, for a given third party recipient identifier (e.g., a particular phone number or a group of phone numbers sharing a common area code), the number (i.e., frequency) of communications that occurred within a given period of time having certain character length attributes. Here, Matrix 3 may be associated with a particular third party phone number (and not a group of third parties) and may indicate communications over the course of a day. In particular, Matrix 3 may indicate that there was a single communication with the third party over 30 characters long, two communications between 0 and 10 characters long, two communications between 10 and 20 characters long, and four communications between 21 and 30 characters long.

An exemplary network communication electronic fingerprint 236 may be depicted below as 24x7 Matrix 4 comprising non-binary values with additional row and column headers for context.

Matrix 4:

$$
\begin{bmatrix}
 & WiFi & Blue\ Tooth & Cellular & Beacon & NFC & Sat & FM/AM \\
0\ hr & Home & 0 & CDMA & 0 & 0 & GPS & 0 \\
... & ... & ... & ... & ... & ... & ... & ... \\
7\ hr & 0 & Car & CDMA & 0 & Coffee\ Store & GPS & 0 \\
... & ... & ... & ... & ... & ... & ... & ... \\
11\ hr & Work & Mobile\ Speaker & CDMA & 0 & 0 & GPS & 0 \\
12\ hr & 0 & 0 & CDMA & Target & 0 & GLONASS & FM \\
... & ... & ... & ... & ... & ... & ... & ... \\
16\ hr & Work & Mobile\ Speakers & CDMA & 0 & 0 & GPS & 0 \\
... & ... & ... & ... & ... & ... & ... & ... \\
23\ hr & Home & 0 & CDMA & 0 & 0 & GPS & 0
\end{bmatrix}
$$

Here, the depicted exemplary network communication electronic fingerprint 238 of Matrix 4 may include information representing the networks to which the first mobile device 102 connected over a twenty-four hour period. By recording network information on an hour by hour basis (e.g., at a predetermined time during an hour), relative duration and frequency of network connections may be established. In Matrix 4, the first mobile device 102 may be connected to a "Home" wi-fi network, a CDMA cellular network, and a GPS satellite during the midnight and 11 AM hours. At 7 AM, the user may be in route to work and may connect to different networks such as a car Bluetooth network, a CDMA cellular network, an NFC point of sale device at a coffee shop, and GPS satellite. Later, the user may be at work during the 11 AM and 4 PM hours, and therefore be connected to the "work" wi-fi network, Bluetooth enabled mobile speakers, CDMA cellular network and GPS satellite. During the lunch hour at noon, the user may run an errand to Target and lose connectivity with the "work" wi-fi network, but communicate with a Target iBeacon and a GLONASS satellite signal. One of ordinary skill in the art will recognize that the values associated with network communication electronic fingerprint 238 may represent machine IDs or addresses such as SSIDs for wi-fi routers. Relatedly, the values may be subject to a hash operation just as other fingerprints described in this specification may be subject to hash operations. Although depicted as a composite fingerprint in Matrix 4, network communication electronic fingerprint 238 may constitute separate electronic fingerprints 240-251 for each antenna and stored separately in mobile device storage 230. Other attributes may be stored such as frequency and duration of connection with regard to each antenna.

First mobile device 102 may further monitor its power consumption using power logic 218, camera usage and the subjects thereof using camera logic 222, payment history through payment instrument logic 224, and navigation history using navigation logic 226. Attributes associated with power consumption may form power status electronic fingerprint 256, whereas attributes associated with purchases made using payment instrument 252 may be stored as payment electronic fingerprint 256. Finally, camera and navigation attributes may form camera electronic fingerprint 258 and navigation electronic fingerprint 260, respectively.

Power electronic fingerprints 256 may include attributes regarding a charged status, a device on/off status, a charging status, and a power consumption indicator, over a given period of time. An example of a power electronic fingerprint 256 is illustrated below as 24x4 Matrix 5.

Matrix 5:

$$
\begin{bmatrix}
& Battery\ Level & Device\ On/Off & Device\ Charging\ Y/N & Battery\ Temp \\
0\ hr & 100 & 1 & 1 & 24 \\
1\ hr & 100 & 1 & 1 & 24 \\
\ldots & \ldots & \ldots & \ldots & \ldots \\
11\ hr & 75 & 0 & 0 & 20 \\
12\ hr & 70 & 1 & 0 & 30 \\
\ldots & \ldots & \ldots & \ldots & \ldots \\
16\ hr & 35 & 1 & 0 & 31 \\
\ldots & \ldots & \ldots & \ldots & \ldots \\
20\ hr & 20 & 1 & 1 & 25 \\
\ldots & \ldots & \ldots & \ldots & \ldots \\
23\ hr & 98 & 1 & 1 & 24
\end{bmatrix}
$$

Here, the exemplary power electronic fingerprint 256 recorded as Matrix 5 may include information representing power status associated with the first mobile device 102 over a twenty-four hour period. Exemplary Matrix 5 indicates for example, that from 12 midnight to approximately 2 AM, the first mobile device 102 had a full battery, is turned on and charging, with a battery temperature (a power consumption indicator) of just over room temperature at 24 degree Celsius. Later in the day, at 11 AM, the first mobile device 102 may have a slightly decreased battery level, be turned off (because, e.g., the user is in a meeting), but not charging with a room temperature battery at 20 degrees Celsius. An hour later, the device may be on, with yet a lower battery level and higher-than-room battery temperature at 30 degrees Celsius. Over the course of the afternoon, the battery level may continue to drop, and the battery temperature may continue to climb, demonstrative of continued use of the first mobile device 102 without charging. In the evening, the battery level may be at 20 percent, but the device may be charging in the user's kitchen, and have a 25 degree battery temperature. Over the next three hours, the first mobile device 102 may continue to charge up to 98 percent, and experience a continue drop in battery temperature.

Logically, similar matrices may be recorded based on camera usage and the captured subject within camera images. For example, the time of day when the camera is used may be recorded together with a location (e.g., using GPS coordinates from satellite 103). It is also possible to monitor the captured subject within camera images by identifying people, animals (e.g., pets), or inanimate objects that may appear therein either because of tags applied by the user or automatically applied through recognition algorithms. Navigation matrices may capture similar attributes regarding usage including but not limited to date/time, geographic location, and addresses entered.

Third party apps may be monitored as well to create yet additional electronic fingerprints. For example, usage of ride sharing apps, newspaper apps, and social networking apps may all be monitored to capture and record attributes regarding first mobile device 102 usage as electronic fingerprints.

Once captured, first mobile device 102 may transmit electronic fingerprints to mobile device authentication server 134. In one embodiment, mobile device authentication server 134 includes electronic fingerprint database 140 where previous electronic fingerprints are stored, and comparison logic 138 operably coupled to database 140 for comparing previous electronic fingerprints to newly received electronic fingerprints. Using matrix similarity algorithms, previous electronic fingerprints associated with the owner or previously authorized user of first mobile device 102 may be compared to electronic fingerprints associated with a user of first mobile device 102 to confirm that the current user is the same person as the owner/authorized user. For example, if previous and new voice communication electronic fingerprints, text communication electronic fingerprints, and power status electronic fingerprints are all within a predetermined similarity threshold, then comparison logic 138 may determine that the current user is the same person as the owner/authorized user. Any number of electronic fingerprints may be compared to determine a match, including any number of historic electronic fingerprints. Upon such a match, comparison logic 138 may store the new electronic fingerprints in electronic fingerprint database 140 so that future comparisons may continue to be improved based on continued learning by the instant disclosure.

In one embodiment, mobile device authentication server 134 may include payment authentication logic 136. Upon a match, payment authentication logic 136 may operate to permit the current user of the first mobile device 102 to use payment instrument 252 on the first mobile device (e.g., with Internet merchant 132 or point of sale device 114). If however, there is no match because it is determined that the current user of the first mobile device 102 is not the same person as the owner/authorized user, then the payment authorization logic 136 may operate to disable the ability of the current user of the first mobile device 102 to use payment instrument 252. Payment authorization logic 136 may operate by sending a key to unlock or enable or conversely, lock or disable, the payment instrument 252 on the first mobile device 102. In this manner, mobile device authentication server 134 may operate to detect and prevent fraud.

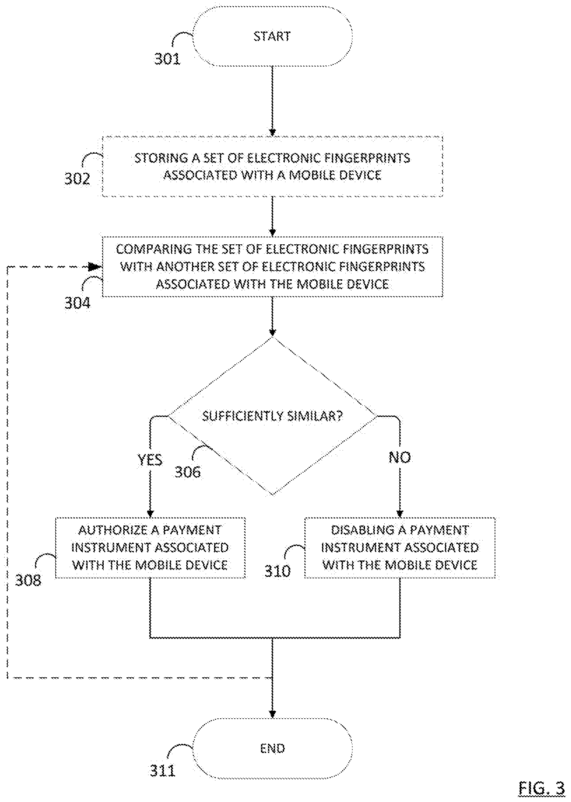

FIG. 3 depicts a flow chart illustrating an exemplary method of using mobile device authentication server of FIG. 1 in accordance with on embodiment of the present disclosure. In one embodiment, the flow starts in method block 301, where for example, a first set of electronic fingerprints associated with first mobile device 102 may be received. In one embodiment, mobile device authentication server 134 may receive the first set of electronic fingerprints from first mobile device 102. As described above, in one embodiment the first set of electronic fingerprints may identify an owner/authorized user of the first mobile device 102 during a first period of time and may include a user communication electronic fingerprint 232, a network communication electronic fingerprint 238, a power status electronic fingerprint 256, and/or other electronic fingerprints such as payment electronic fingerprint 254, camera electronic fingerprint 258, and navigation electronic fingerprint 260. A second set of electronic fingerprints associated with first mobile device 102 may also be received as part of method block 301. In one embodiment, mobile device authentication server 134 may receive the second set of electronic fingerprints from first mobile device 102. The second set of electronic fingerprint may identify a second user of the first mobile device 102 during a second period of time using for example similar types of electronic fingerprints, e.g., electronic fingerprints 232, 238, 256, 254, 258, and/or 260. In one embodiment, the receipt of first and second sets of electronic fingerprints are received at different times. In one embodiment, the flowchart proceeds to method block 302 where the first set of electronic fingerprints is stored for example in a computer readable medium, e.g., electronic fingerprint database 140 as described with reference to FIG. 1.

The method may proceed or alternatively start at block 304 where the first set of electronic fingerprints is compared to the second set of electronic fingerprints. Logically, the comparison may be performed by comparison logic 138 as described with reference to FIG. 1. As described above with reference to comparison logic 138, the first and second sets of electronic fingerprints may comprise one or more matrices representing various attributes. Using, for example, matrix similarity algorithms, comparison logic 138 may determine whether the matrices are sufficiently similar using a predetermined similarity threshold, and thus determine whether the second user is the first user (i.e., owner or authorized user), as depicted in decision block 306. If the matrices match, e.g., based on the comparison and predetermined similarity threshold, then the method may continue with method block 308, where a payment instrument of the mobile device, e.g., payment instrument 252 is authorized, e.g., by payment authentication logic 136 as described above with respect to FIGs. 1 and 2. Alternatively, if the matrices do not match (e.g., the comparison performed by comparison logic 138 determines that the matrices are not sufficiently similar), then a payment instrument associated with the mobile device (e.g., payment instrument 252) may be disabled, for example by payment authentication logic 136 as described above with reference to FIGs. 1-2. The method may either iteratively repeat itself as needed or on a predetermined schedule as indicated by the dotted arrow, or it may end at block 311.

In one embodiment, method block 308 may include storing the second set of electronic fingerprints in a computer readable medium, e.g., in electronic fingerprint database 140 so that it can be associated with the owner/authorized user of the first mobile device 102. In one embodiment, the second set of electronic fingerprints may be considered the trusted first set of electronic fingerprints for subsequent comparison to another second set of electronic fingerprints. In another embodiment, the data in the second set of electronic fingerprints may be averaged or otherwise combined (e.g., based on a weighting algorithm) with the data in the trusted first set of electronic fingerprints for use it for subsequent comparisons. In this manner, the mobile device authentication server 134 may demonstrate intelligence by continuing to learning and update the profile/behavioral pattern of the owner/authorized user of the first mobile device.

As a result of the method and system, a technical problem of reliably matching current electronic user fingerprints to known electronic fingerprints may be addressed. By creating matrices of electronic fingerprint elements and comparing known elements to received elements, a new and reliable manner of determining if an electronic device is from a known user may be executed. As a result, computer security may be improved, fraud may be reduced, and less computational time may be wasted on deterring fraud.

As used herein, the following terms have the meanings described thereto as set forth below. "Logic" may refer to any single or collection of circuit(s), integrated circuit(s), processor(s), processing device(s), transistor(s), memory(s), storage(s), computer readable medium(s), combination logic circuit(s), or any combination of the above that is capable of providing a desired operation(s) or function(s). For example, "logic" may take the form of a processor executing instructions from memory, storage, or computer readable media, or a dedicated integrated circuit. "Memory," "computer-readable media," and "storage" may refer to any suitable internal or external volatile or non-volatile, memory device, memory chip(s), or storage device or chip(s) such as, but not limited to system memory, frame buffer memory, flash memory, random access memory (RAM), read only memory (ROM), a register, a latch, or any combination of the above. A "processor" may refer to one or more dedicated or non-dedicated: microprocessors, micro-controllers, sequencers, micro-sequencers, digital signal processors, processing engines, hardware accelerators, applications specific circuits (ASICs), state machines, programmable logic arrays, any integrated circuit(s), discreet circuit(s), etc. that is/are capable of processing data or information, or any suitable combination(s) thereof. A "processing device" may refer to any number of physical devices that is/are capable of processing (e.g., performing a variety of operations on) information (e.g., information in the form of binary data or carried/represented by any suitable media signal, etc.). For example, a processing device may be a processor capable of executing executable instructions, a desktop computer, a laptop computer, a mobile device, a hand-held device, a server (e.g., a file server, a web server, a program server, or any other server), any other computer, etc. or any combination of the above. An example of a processing device may be a device that includes one or more integrated circuits comprising transistors that are programmed or configured to perform a particular task. "Executable instructions" may refer to software, firmware, programs, instructions or any other suitable instructions or commands capable of being processed by a suitable processor.

**Claims**

1. An apparatus (134) for detecting unauthorized use of a mobile device having a payment instrument stored thereon, the apparatus comprising:

   comparison logic (138) operative to determine whether a first user of the mobile device is a second user of the mobile device by comparing a first set of electronic fingerprints associated with the mobile device to a second set of electronic fingerprints associated with the mobile device,
   wherein the first set of electronic fingerprints identifies the first user of the mobile device during a first period of time and wherein the first set of electronic fingerprints includes:

      a first user communication electronic fingerprint;
      a first network communication electronic fingerprint; and
      a first power status electronic fingerprint; and

   wherein the second set of electronic fingerprints identifies the second user of the mobile device during a second period of time and wherein the second set of electronic fingerprints includes:

      a second user communication electronic fingerprint;
      a second network communication electronic fingerprint; and
      a second power status electronic fingerprint; and

   payment authorization logic (136) operable to send a key capable of being used by the mobile device to lock or disable the payment instrument on the mobile device so as to prevent use of the payment instrument if the first user is determined not to be the second user.

2. The apparatus (134) of claim 1, wherein:

   the first user communication electronic fingerprint is based on at least one of: a first voice communication made using the mobile device and a first text communication made using the mobile device; and
   the second user communication electronic fingerprint is based on at least one of: a second voice communication made using the mobile device and a second text communication made using the mobile device.

3. The apparatus (134) of claim 1, wherein:
   the first user communication electronic fingerprint is based on a speaking pattern associated with the first user communication; and
   the second user communication electronic fingerprint is based on a speaking pattern associated with the second user communication.

4. The apparatus (134) of claim 3, wherein the speaking patterns associated with the first and second users represent at least one of:

   the duration in which a microphone associated with the mobile device converted acoustical energy into electrical energy; and
   the duration in which a speaker associated with the mobile device converted electrical energy into acoustical energy.

5. The apparatus (134) of claim 1, wherein:

the first set of electronic fingerprints identifies the first user of the mobile device during the first period of time based on a first set of content tags applied to a first set of images stored on the mobile device; and

the second set of electronic fingerprints identifies the second user of the mobile devices during the second period of time based on a second set of content tags applied to a second set of images stored on the mobile device.

6. The apparatus (134) of claim 5, wherein:

the mobile device comprises a camera; and
the first set of images and the second set of images were captured by the camera.

7. The apparatus (134) of any preceding claim, wherein each of the first network communication electronic fingerprint and the second network communication electronic fingerprint is based on at least one of: an identifier of a network with which a network communication was made using the mobile device, a duration of the network communication, and a frequency of the network communication.

8. The apparatus (134) of any preceding claim, wherein each of the first power status electronic fingerprint and the second power status electronic fingerprint is based on at least one of: a charged status of the mobile device, a mobile device on or off status, a charging status for the mobile device, and a mobile device power consumption indicator.

9. A method for detecting unauthorized use of a mobile device having a payment instrument stored thereon, the method comprising:

storing (302), in a tangible computer readable medium in an electronic mobile device authentication server, a first set of electronic fingerprints associated with the mobile device, wherein the first set of electronic fingerprints identifies a first user of the mobile device during a first period of time and wherein the first set of electronic fingerprints includes:

a first user communication electronic fingerprint;
a first network communication electronic fingerprint; and
a first power status electronic fingerprint;

comparing (304), by a processor, the first set of electronic fingerprints with a second set of electronic fingerprints associated with the mobile device to determine whether the first user is a second user of the mobile device, wherein the second set of electronic fingerprints identifies the second user of the mobile device during a second period of time and wherein the second set of electronic fingerprints includes:

a second user communication electronic fingerprint;
a second network communication electronic fingerprint; and
a second power status electronic fingerprint; and sending (310), by the processor, a key capable of being used by the mobile device to lock or disable the payment instrument on the mobile device so as to prevent use of the payment instrument if the first user is determined not to be the second user.

10. The method of claim 9, wherein:

the first user communication electronic fingerprint is based on at least one of: a first voice communication made using the mobile device and a first text communication made using the mobile device; and
the second user communication electronic fingerprint is based on at least one of: a second voice communication made using the mobile device and a second text communication made using the mobile device.

11. The method of claim 9 or 10, wherein:

the first user communication electronic fingerprint is based on at least one of:
a first identifier of a first third party associated with a first user communication; a duration of the first user communication, a speaking pattern associated with the first user communication, a character length of the first user communication, a special character usage indicator associated with the first user communication, a volume associated with the first user communication, and a protocol, standard, or technology associated with the first user communication; and

the second user communication electronic fingerprint is based on at least one of:

a second identifier of a second third party associated with a second user communication; a duration of the second user communication, a speaking pattern associated with the second user communication, a character length of the second user communication, a special character usage indicator associated with the second user communication, a volume associated with the second user communication, and a protocol, standard, or technology associated with the second user communication.

12. The method of any of claims 9 to 11, wherein the first network communication electronic fingerprint and the second network communication electronic fingerprint are based on at least one of: an identifier of a network with which a network communication was made using the mobile device, a duration of the network communication, and a frequency of the network communication.

13. A tangible computer readable medium including executable instructions stored thereon, such that when executed by a processor, enable the processor to perform a method for detecting unauthorized use of a mobile device having a payment instrument stored thereon, the method comprising:

storing, in a tangible computer readable medium in an electronic mobile device authentication server, a first set of electronic fingerprints associated with the mobile device, wherein the first set of electronic fingerprints identifies a first user of the mobile device during a first period of time and wherein the first set of electronic fingerprints includes:

a first user communication electronic fingerprint;
a first network communication electronic fingerprint; and
a first power status electronic fingerprint;

comparing, by a processor, the first set of electronic fingerprints with a second set of electronic fingerprints associated with the mobile device to determine whether the first user is a second user, wherein the second set of electronic fingerprints identifies the second user of the mobile device during a second period of time and wherein the second set of electronic fingerprints includes:

a second user communication electronic fingerprint;
a second network communication electronic fingerprint; and
a second power status electronic fingerprint; and sending, by the processor, a key capable of being used by the mobile device to lock or disable the payment instrument on the mobile device so as to prevent use of the payment instrument if the first user is determined not to be the second user.

14. The computer readable medium of claim 13, wherein:

the first user communication electronic fingerprint is based on at least one of: a first voice communication made using the mobile device and a first text communication made using the mobile device; and
the second user communication electronic fingerprint is based on at least one of: a second voice communication made using the mobile device and a second text communication made using the mobile device.

15. The computer readable medium of claim 13 or 14, wherein the first power status electronic fingerprint and the second power status electronic fingerprint are based on at least one of: a charged status of the mobile device, a mobile device on or off status, a charging status for the mobile device, and a mobile device power consumption indicator.

**Patentansprüche**

1. Vorrichtung (134) zum Erkennen einer unbefugten Verwendung eines Mobilgeräts mit einem darauf gespeicherten Zahlungsinstrument, die Vorrichtung umfassend:

eine Vergleichslogik (138), die wirksam ist, um zu bestimmen, ob ein erster Benutzer des Mobilgeräts ein zweiter Benutzer des Mobilgeräts ist, indem ein erster Satz von elektronischen Fingerabdrücken, der mit dem Mobilgerät verbunden ist, mit einem zweiten Satz von elektronischen Fingerabdrücken, der mit dem Mobilgerät verbunden ist, verglichen wird,
wobei der erste Satz von elektronischen Fingerabdrücken den ersten Benutzer des Mobilgeräts während eines ersten Zeitraums identifiziert und wobei der erste Satz von elektronischen Fingerabdrücken beinhaltet:

einen ersten elektronischen Fingerabdruck für die Benutzerkommunikation;
einen ersten elektronischen Fingerabdruck für die Netzwerkkommunikation; und
einen ersten elektronischen Fingerabdruck für den Stromstatus; und

wobei der zweite Satz von elektronischen Fingerabdrücken den zweiten Benutzer des Mobilgeräts während eines zweiten Zeitraums identifiziert und wobei der zweite Satz von elektronischen Fingerabdrücken beinhaltet:

einen zweiten elektronischen Fingerabdruck für die Benutzerkommunikation;
einen zweiten elektronischen Fingerabdruck für die Netzwerkkommunikation; und
einen zweiten elektronischen Fingerabdruck für den Stromstatus; und

eine Zahlungsautorisierungslogik (136), die wirksam ist, um einen Schlüssel zu senden, der von dem Mobilgerät verwendet werden kann, um das Zahlungsinstrument auf dem Mobilgerät zu sperren oder zu deaktivieren, um eine Verwendung des Zahlungsinstruments zu verhindern, wenn bestimmt wird, dass der erste Benutzer nicht der zweite Benutzer ist.

2. Vorrichtung (134) nach Anspruch 1, wobei:
der erste elektronische Fingerabdruck für die Benutzerkommunikation auf zumindest einem von Folgendem basiert: einer ersten Sprachkommunikation, die unter Verwendung des Mobilgeräts erfolgt, und einer ersten Textkommunikation, die unter Verwendung des Mobilgeräts erfolgt; und
der zweite elektronische Fingerabdruck für die Benutzerkommunikation auf zumindest einem von Folgendem basiert: einer zweiten Sprachkommunikation, die unter Verwendung des Mobilgeräts erfolgt, und einer zweiten Textkommunikation, die unter Verwendung des Mobilgeräts erfolgt.

3. Vorrichtung (134) nach Anspruch 1, wobei:
der erste elektronische Fingerabdruck für die Benutzerkommunikation auf einem mit der ersten Benutzerkommunikation verbundenen Sprechmuster basiert; und
der zweite elektronische Fingerabdruck für die Benutzerkommunikation auf einem mit der zweiten Benutzerkommunikation verbundenen Sprechmuster basiert.

4. Vorrichtung (134) nach Anspruch 3, wobei die Sprechmuster, die mit dem ersten und dem zweiten Benutzer verbunden sind, zumindest eines von Folgendem repräsentieren:

die Zeitdauer, für die ein mit dem Mobilgerät verbundenes Mikrofon akustische Energie in elektrische Energie umgewandelt hat; und
die Zeitdauer, für die ein mit dem Mobilgerät verbundener Lautsprecher elektrische Energie in akustische Energie umgewandelt hat.

5. Vorrichtung (134) nach Anspruch 1, wobei:

der erste Satz von elektronischen Fingerabdrücken den ersten Benutzer des Mobilgeräts während des ersten Zeitraums basierend auf einem ersten Satz von Inhaltsmarkierungen identifiziert, die auf einen ersten Satz von Bildern angewendet werden, die auf dem Mobilgerät gespeichert sind; und
der zweite Satz von elektronischen Fingerabdrücken den zweiten Benutzer des Mobilgeräts während des zweiten Zeitraums basierend auf einem zweiten Satz von Inhaltsmarkierungen identifiziert, die auf einen zweiten Satz von Bildern angewendet werden, die auf dem Mobilgerät gespeichert sind.

6. Vorrichtung (134) nach Anspruch 5, wobei:

das Mobilgerät eine Kamera umfasst; und
der erste Satz von Bildern und der zweite Satz von Bildern von der Kamera aufgenommen wurden.

7. Vorrichtung (134) nach einem der vorhergehenden Ansprüche, wobei sowohl der erste elektronische Fingerabdruck für die Netzwerkkommunikation als auch der zweite elektronische Fingerabdruck für die Netzwerkkommunikation auf zumindest einem von Folgendem basieren: einer Kennung eines Netzwerks, mit dem unter Verwendung des Mobilgeräts eine Netzwerkkommunikation durchgeführt wurde, einer Dauer der Netzwerkkommunikation und einer Frequenz der Netzwerkkommunikation.

8. Vorrichtung (134) nach einem der vorhergehenden Ansprüche, wobei sowohl der erste elektronische Fingerabdruck für den Stromstatus als auch der zweite elektronische Fingerabdruck für den Stromstatus auf zumindest einem von Folgendem basieren: einem Ladestatus des Mobilgeräts, einem Ein- oder Aus-Status des Mobilgeräts, einem Aufladestatus des Mobilgeräts und einem Stromverbrauchsindikator des Mobilgeräts.

9. Verfahren zum Erkennen einer unbefugten Verwendung eines Mobilgeräts mit einem darauf gespeicherten Zahlungsinstrument, das Verfahren umfassend:

Speichern (302) eines ersten Satzes von elektronischen Fingerabdrücken, die mit dem Mobilgerät verbunden sind, auf einem physischen computerlesbaren Medium in einem elektronischen Mobilgeräte-Authentifizierungsserver, wobei der erste Satz von elektronischen Fingerabdrücken einen ersten Benutzer des Mobilgeräts während eines ersten Zeitraums identifiziert und wobei der erste Satz von elektronischen Fingerabdrücken beinhaltet:

einen ersten elektronischen Fingerabdruck für die Benutzerkommunikation;
einen ersten elektronischen Fingerabdruck für die Netzwerkkommunikation; und
einen ersten elektronischen Fingerabdruck für den Stromstatus;

Vergleichen (304), durch einen Prozessor, des ersten Satzes von elektronischen Fingerabdrücken mit einem zweiten Satz von elektronischen Fingerabdrücken, der mit dem Mobilgerät verbunden ist, um zu bestimmen, ob der erste Benutzer ein zweiter Benutzer des Mobilgeräts ist, wobei der zweite Satz von elektronischen Fingerabdrücken den zweiten Benutzer des Mobilgeräts während eines zweiten Zeitraums identifiziert, und wobei der zweite Satz von elektronischen Fingerabdrücken beinhaltet:

einen zweiten elektronischen Fingerabdruck für die Benutzerkommunikation;
einen zweiten elektronischen Fingerabdruck für die Netzwerkkommunikation; und
einen zweiten elektronischen Fingerabdruck für den Stromstatus; und

Senden (310), durch den Prozessor, eines Schlüssels, der von dem Mobilgerät verwendet werden kann, um das Zahlungsinstrument auf dem Mobilgerät zu sperren oder zu deaktivieren, um eine Verwendung des Zahlungsinstruments zu verhindern, wenn bestimmt wird, dass der erste Benutzer nicht der zweite Benutzer ist.

10. Verfahren nach Anspruch 9, wobei:

der erste elektronische Fingerabdruck für die Benutzerkommunikation auf zumindest einem von Folgendem basiert: einer ersten Sprachkommunikation, die unter Verwendung des Mobilgeräts erfolgt, und einer ersten Textkommunikation, die unter Verwendung des Mobilgeräts erfolgt; und
der zweite elektronische Fingerabdruck für die Benutzerkommunikation auf zumindest einem von Folgendem basiert: einer zweiten Sprachkommunikation, die unter Verwendung des Mobilgeräts erfolgt, und einer zweiten Textkommunikation, die unter Verwendung des Mobilgeräts erfolgt.

11. Verfahren nach Anspruch 9 oder 10, wobei:
der erste elektronische Fingerabdruck für die Benutzerkommunikation auf zumindest einem von Folgendem basiert: einer ersten Kennung einer ersten Drittpartei, die mit einer ersten Benutzerkommunikation verbunden ist; einer Dauer der ersten Benutzerkommunikation, einem Sprechmuster, das mit der ersten Benutzerkommunikation verbunden ist, einer Zeichenlänge der ersten Benutzerkommunikation, einem Indikator für die Nutzung von Sonderzeichen, der mit der ersten Benutzerkommunikation verbunden ist, einem Volumen, das mit der ersten Benutzerkommunikation verbunden ist, und einem Protokoll, einem Standard oder einer Technologie, das/der/die mit der ersten Benutzerkommunikation verbunden ist; und
der zweite elektronische Fingerabdruck für die Benutzerkommunikation auf zumindest einem von Folgendem basiert: einer zweiten Kennung einer zweiten Drittpartei, die mit einer zweiten Benutzerkommunikation verbunden ist; einer Dauer der zweiten Benutzerkommunikation, einem Sprechmuster, das mit der zweiten Benutzerkommunikation verbunden ist, einer Zeichenlänge der zweiten Benutzerkommunikation, einem Indikator für die Nutzung von Sonderzeichen, der mit der zweiten Benutzerkommunikation verbunden ist, einem Volumen, das mit der zweiten Benutzerkommunikation verbunden ist, und einem Protokoll, einem Standard oder einer Technologie, das/der/die mit der zweiten Benutzerkommunikation verbunden ist.

**12.** Verfahren nach einem der Ansprüche 9 bis 11, wobei sowohl der erste elektronische Fingerabdruck für die Netzwerkkommunikation als auch der zweite elektronische Fingerabdruck für die Netzwerkkommunikation auf zumindest einem von Folgendem basieren:
einer Kennung eines Netzwerks, mit dem unter Verwendung des Mobilgeräts eine Netzwerkkommunikation durchgeführt wurde, einer Dauer der Netzwerkkommunikation und einer Frequenz der Netzwerkkommunikation.

**13.** Physisches computerlesbares Medium, das darauf gespeicherte ausführbare Anweisungen enthält, sodass der Prozessor bei Ausführung durch einen Prozessor in die Lage versetzt wird, ein Verfahren zum Erkennen einer unbefugten Verwendung eines Mobilgeräts mit einem darauf gespeicherten Zahlungsinstrument durchzuführen, das Verfahren umfassend:

Speichern eines ersten Satzes von elektronischen Fingerabdrücken, die mit dem Mobilgerät verbunden sind, auf einem physischen computerlesbaren Medium in einem elektronischen Mobilgeräte-Authentifizierungsserver, wobei der erste Satz von elektronischen Fingerabdrücken einen ersten Benutzer des Mobilgeräts während eines ersten Zeitraums identifiziert und wobei der erste Satz von elektronischen Fingerabdrücken beinhaltet:

einen ersten elektronischen Fingerabdruck für die Benutzerkommunikation;
einen ersten elektronischen Fingerabdruck für die Netzwerkkommunikation; und
einen ersten elektronischen Fingerabdruck für den Stromstatus;

Vergleichen, durch einen Prozessor, des ersten Satzes von elektronischen Fingerabdrücken mit einem zweiten Satz von elektronischen Fingerabdrücken, der mit dem Mobilgerät verbunden ist, um zu bestimmen, ob der erste Benutzer ein zweiter Benutzer ist, wobei der zweite Satz von elektronischen Fingerabdrücken den zweiten Benutzer des Mobilgeräts während eines zweiten Zeitraums identifiziert, und wobei der zweite Satz von elektronischen Fingerabdrücken beinhaltet:

einen zweiten elektronischen Fingerabdruck für die Benutzerkommunikation;
einen zweiten elektronischen Fingerabdruck für die Netzwerkkommunikation; und
einen zweiten elektronischen Fingerabdruck für den Stromstatus; und

Senden, durch den Prozessor, eines Schlüssels, der von dem Mobilgerät verwendet werden kann, um das Zahlungsinstrument auf dem Mobilgerät zu sperren oder zu deaktivieren, um eine Verwendung des Zahlungsinstruments zu verhindern, wenn bestimmt wird, dass der erste Benutzer nicht der zweite Benutzer ist.

**14.** Computerlesbares Medium nach Anspruch 13, wobei:

der erste elektronische Fingerabdruck für die Benutzerkommunikation auf zumindest einem von Folgendem basiert: einer ersten Sprachkommunikation, die unter Verwendung des Mobilgeräts erfolgt, und einer ersten Textkommunikation, die unter Verwendung des Mobilgeräts erfolgt; und
der zweite elektronische Fingerabdruck für die Benutzerkommunikation auf zumindest einem von Folgendem basiert: einer zweiten Sprachkommunikation, die unter Verwendung des Mobilgeräts erfolgt, und einer zweiten Textkommunikation, die unter Verwendung des Mobilgeräts erfolgt.

**15.** Computerlesbares Medium nach Anspruch 13 oder 14, wobei sowohl der erste elektronische Fingerabdruck für den Stromstatus als auch der zweite elektronische Fingerabdruck für den Stromstatus auf zumindest einem von Folgendem basieren: einem Ladestatus des Mobilgeräts, einem Ein- oder Aus-Status des Mobilgeräts, einem Aufladestatus des Mobilgeräts und einem Stromverbrauchsindikator des Mobilgeräts.

## Revendications

**1.** Appareil (134) de détection d'une utilisation non autorisée d'un dispositif mobile ayant un instrument de paiement stocké sur celui-ci, l'appareil comprenant :

une logique de comparaison (138) fonctionnelle pour déterminer si un premier utilisateur du dispositif mobile est un deuxième utilisateur du dispositif mobile par comparaison d'un premier ensemble d'empreintes électroniques associé au dispositif mobile à un deuxième ensemble d'empreintes électroniques associé au dispositif mobile,

dans lequel le premier ensemble d'empreintes électroniques identifie le premier utilisateur du dispositif mobile pendant une première période et dans lequel le premier ensemble d'empreintes électroniques comporte :

une première empreinte électronique de communication d'utilisateur ;
une première empreinte électronique de communication en réseau ; et
une première empreinte électronique de statut de puissance ; et

dans lequel le deuxième ensemble d'empreintes électroniques identifie le deuxième utilisateur du dispositif mobile pendant une deuxième période et dans lequel le deuxième ensemble d'empreintes électroniques comporte :

une deuxième empreinte électronique de communication d'utilisateur ;
une deuxième empreinte électronique de communication en réseau ; et
une deuxième empreinte électronique de statut de puissance ; et

une logique d'autorisation de paiement (136) fonctionnelle pour envoyer une clé capable d'être utilisée par le dispositif mobile pour verrouiller ou désactiver l'instrument de paiement sur le dispositif mobile de manière à empêcher l'utilisation de l'instrument de paiement si le premier utilisateur est déterminé comme n'étant pas le deuxième utilisateur.

2.  Appareil (134) selon la revendication 1, dans lequel :
la première empreinte électronique de communication d'utilisateur est basée sur au moins l'une parmi : une première communication vocale effectuée à l'aide du dispositif mobile et une première communication texte effectuée à l'aide du dispositif mobile ; et
la deuxième empreinte électronique de communication d'utilisateur est basée sur au moins l'une parmi : une deuxième communication vocale effectuée à l'aide du dispositif mobile et une deuxième communication texte effectuée à l'aide du dispositif mobile.

3.  Appareil (134) selon la revendication 1, dans lequel :
la première empreinte électronique de communication d'utilisateur est basée sur un modèle de parole associé à la première communication d'utilisateur ; et
la deuxième empreinte électronique de communication d'utilisateur est basée sur un modèle de parole associé à la deuxième communication d'utilisateur.

4.  Appareil (134) selon la revendication 3, dans lequel les modèles de parole associés aux premier et deuxième utilisateurs représentent au moins l'une parmi :

la durée pendant laquelle un microphone associé au dispositif mobile a converti de l'énergie acoustique en énergie électrique ; et
la durée pendant laquelle un haut-parleur associé au dispositif mobile a converti de l'énergie électrique en énergie acoustique.

5.  Appareil (134) selon la revendication 1, dans lequel :

le premier ensemble d'empreintes électroniques identifie le premier utilisateur du dispositif mobile pendant la première période sur la base d'un premier ensemble d'étiquettes de contenu appliqué à un premier ensemble d'images stocké sur le dispositif mobile ; et
le deuxième ensemble d'empreintes électroniques identifie le deuxième utilisateur des dispositifs mobiles pendant la deuxième période sur la base d'un deuxième ensemble d'étiquettes de contenu appliqué à un deuxième ensemble d'images stocké sur le dispositif mobile.

6.  Appareil (134) selon la revendication 5, dans lequel :

le dispositif mobile comprend une caméra ; et
le premier ensemble d'images et le deuxième ensemble d'images ont été capturés par la caméra.

7.  Appareil (134) selon l'une quelconque des revendications précédentes, dans lequel chacune de la première empreinte électronique de communication en réseau et de la deuxième empreinte électronique de communication en réseau est basée sur au moins l'un parmi : un identifiant d'un réseau avec lequel une communication en réseau a été effectuée à l'aide du dispositif mobile, une durée de la communication en réseau et une fréquence de la communication en réseau.

8. Appareil (134) selon l'une quelconque des revendications précédentes, dans lequel chacune de la première empreinte électronique de statut de puissance et de la deuxième empreinte électronique de statut de puissance est basée sur au moins l'un parmi : un statut chargé du dispositif mobile, un statut sous tension ou hors tension du dispositif mobile, un statut en charge pour le dispositif mobile et un indicateur de consommation de puissance du dispositif mobile.

9. Procédé de détection d'une utilisation non autorisée d'un dispositif mobile ayant un instrument de paiement stocké sur celui-ci, le procédé comprenant :

le stockage (302), dans un support tangible lisible par ordinateur dans un serveur d'authentification de dispositif mobile électronique, d'un premier ensemble d'empreintes électroniques associé au dispositif mobile, dans lequel le premier ensemble d'empreintes électroniques identifie un premier utilisateur du dispositif mobile pendant une première période et dans lequel le premier ensemble d'empreintes électroniques comporte :

une première empreinte électronique de communication d'utilisateur ;
une première empreinte électronique de communication en réseau ; et
une première empreinte électronique de statut de puissance ;

la comparaison (304), par un processeur, du premier ensemble d'empreintes électroniques avec un deuxième ensemble d'empreintes électroniques associé au dispositif mobile pour déterminer si le premier utilisateur est un deuxième utilisateur du dispositif mobile, dans lequel le deuxième ensemble d'empreintes électroniques identifie le deuxième utilisateur du dispositif mobile pendant une deuxième période et dans lequel le deuxième ensemble d'empreintes électroniques comporte :

une deuxième empreinte électronique de communication d'utilisateur ;
une deuxième empreinte électronique de communication en réseau ; et
une deuxième empreinte électronique de statut de puissance ; et

l'envoi (310), par le processeur, d'une clé capable d'être utilisée par le dispositif mobile pour verrouiller ou désactiver l'instrument de paiement sur le dispositif mobile de manière à empêcher l'utilisation de l'instrument de paiement si le premier utilisateur est déterminé comme n'étant pas le deuxième utilisateur.

10. Procédé selon la revendication 9, dans lequel :

la première empreinte électronique de communication d'utilisateur est basée sur au moins l'une parmi : une première communication vocale effectuée à l'aide du dispositif mobile et une première communication texte effectuée à l'aide du dispositif mobile ; et
la deuxième empreinte électronique de communication d'utilisateur est basée sur au moins l'une parmi : une deuxième communication vocale effectuée à l'aide du dispositif mobile et une deuxième communication texte effectuée à l'aide du dispositif mobile.

11. Procédé selon la revendication 9 ou 10, dans lequel :
la première empreinte électronique de communication d'utilisateur est basée sur au moins l'un parmi :
un premier identifiant d'un premier tiers associé à une première communication d'utilisateur ; une durée de la première communication d'utilisateur, un modèle de parole associé à la première communication d'utilisateur, une longueur de caractères de la première communication d'utilisateur, un indicateur d'utilisation de caractères spéciaux associé à la première communication d'utilisateur, un volume associé à la première communication d'utilisateur, et un protocole, une norme ou une technologie associé à la première communication d'utilisateur ; et
la deuxième empreinte électronique de communication d'utilisateur est basée sur au moins l'un parmi :
un deuxième identifiant d'un deuxième tiers associé à une deuxième communication d'utilisateur ; une durée de la deuxième communication d'utilisateur, un modèle de parole associé à la deuxième communication d'utilisateur, une longueur de caractères de la deuxième communication d'utilisateur, un indicateur d'utilisation de caractères spéciaux associé à la deuxième communication d'utilisateur, un volume associé à la deuxième communication d'utilisateur, et un protocole, une norme ou une technologie associé à la deuxième communication d'utilisateur.

16

**12.** Procédé selon l'une quelconque des revendications 9 à 11, dans lequel la première empreinte électronique de communication en réseau et la deuxième empreinte électronique de communication en réseau sont basées sur au moins l'un parmi : un identifiant d'un réseau avec lequel une communication en réseau a été effectuée à l'aide du dispositif mobile, une durée de la communication en réseau et une fréquence de la communication en réseau.

**13.** Support tangible lisible par ordinateur comportant des instructions exécutables stockées sur celui-ci qui, lorsqu'elles sont exécutées par un processeur, permettent au processeur de réaliser un procédé de détection d'une utilisation non autorisée d'un dispositif mobile ayant un instrument de paiement stocké sur celui-ci, le procédé comprenant :

   le stockage, dans un support tangible lisible par ordinateur dans un serveur d'authentification de dispositif mobile électronique, d'un premier ensemble d'empreintes électroniques associé au dispositif mobile, dans lequel le premier ensemble d'empreintes électroniques identifie un premier utilisateur du dispositif mobile pendant une première période et dans lequel le premier ensemble d'empreintes électroniques comporte :

      une première empreinte électronique de communication d'utilisateur ;
      une première empreinte électronique de communication en réseau ; et
      une première empreinte électronique de statut de puissance ;

   la comparaison, par un processeur, du premier ensemble d'empreintes électroniques avec un deuxième ensemble d'empreintes électroniques associé au dispositif mobile pour déterminer si le premier utilisateur est un deuxième utilisateur, dans lequel le deuxième ensemble d'empreintes électroniques identifie le deuxième utilisateur du dispositif mobile pendant une deuxième période et dans lequel le deuxième ensemble d'empreintes électroniques comporte :

      une deuxième empreinte électronique de communication d'utilisateur ;
      une deuxième empreinte électronique de communication en réseau ; et
      une deuxième empreinte électronique de statut de puissance ; et

   l'envoi, par le processeur, d'une clé capable d'être utilisée par le dispositif mobile pour verrouiller ou désactiver l'instrument de paiement sur le dispositif mobile de manière à empêcher l'utilisation de l'instrument de paiement si le premier utilisateur est déterminé comme n'étant pas le deuxième utilisateur.

**14.** Support lisible par ordinateur selon la revendication 13, dans lequel :

   la première empreinte électronique de communication d'utilisateur est basée sur au moins l'une parmi : une première communication vocale effectuée à l'aide du dispositif mobile et une première communication texte effectuée à l'aide du dispositif mobile ; et
   la deuxième empreinte électronique de communication d'utilisateur est basée sur au moins l'une parmi : une deuxième communication vocale effectuée à l'aide du dispositif mobile et une deuxième communication texte effectuée à l'aide du dispositif mobile.

**15.** Support lisible par ordinateur selon la revendication 13 ou 14, dans lequel la première empreinte électronique de statut de puissance et la deuxième empreinte électronique de statut de puissance sont basées sur au moins l'un parmi : un statut chargé du dispositif mobile, un statut sous tension ou hors tension du dispositif mobile, un statut en charge du dispositif mobile et un indicateur de consommation de puissance du dispositif mobile.

FIG. 1

FIG. 2

START

301

STORING A SET OF ELECTRONIC FINGERPRINTS
ASSOCIATED WITH A MOBILE DEVICE

302

COMPARING THE SET OF ELECTRONIC FINGERPRINTS
WITH ANOTHER SET OF ELECTRONIC FINGERPRINTS
ASSOCIATED WITH THE MOBILE DEVICE

304

SUFFICIENTLY SIMILAR?

YES    306    NO

AUTHORIZE A PAYMENT
INSTRUMENT ASSOCIATED
WITH THE MOBILE DEVICE

308

DISABLING A PAYMENT
INSTRUMENT ASSOCIATED
WITH THE MOBILE DEVICE

310

END

311

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160063471 A1